# EUROPEAN PATENT SPECIFICATION

(11) **EP 0 332 850 B1**
(45) Date of publication and mention of the grant of the patent: **20.01.1993**
(21) Application number: 89102375.6
(22) Date of filing: 11.02.1989
(51) Int. Cl.: A01D 41/12, F16D 25/063

(54) **Drive assembly, and self-propelled forage harvester with such an assembly**
Antriebs-Baugruppe und selbstfahrender Feldhäcksler mit einer solchen Baugruppe
Groupe propulseur et sa ramasseuse-hacheuse automotrice

(30) Priority: 19.02.1988 US 157558
(43) Date of publication of application: 20.09.1989
(73) Proprietor: DEERE & COMPANY, Moline, Illinois 61265 (US)
(72) Inventor: Bramstedt, Gerd, D-6660 Zweibrücken (DE); Love, Mahlon Lloyd, Geneseo Illinois 61254 (US); Hennen, John Joseph, Ottumwa Iowa 52501 (US)
(74) Representative: Feldmann, Bernhard

(56) References cited:
- DE-A- 2 343 184
- DE-A- 3 127 395
- US-A- 3 701 239
- Deere & Company Parts Catalog PC-2074 (5.6.90) Page 3D20

## Description

The present invention relates to a drive assembly having a shaft, a sheave freely rotatably mounted on the shaft, an hydraulically operable clutch with a first portion mounted for rotation with the shaft and a second portion mounted for rotation with the sheave, and hydraulic means for selectively effecting driving connection between the first and second portions including a detachable fluid supply source coupler and a blind passage running from the coupler via the shaft.

It is a known practice to couple a main drive line clutch to the flywheel of an engine. A clutch so embodied does not lend itself to design flexibility since the use of various engines would require the use of a special fly-wheel, nor does the clutch lend itself to easy assembly or serviceability. US-A-3,701,239 discloses a drive line assembly with such a clutch arrangement in a harvester.

In particular, US-A-3,701,239 concerns a self-propelled forage harvester having an engine, a cutterhead and a drive assembly coupling the engine to the cutterhead, the drive assembly comprising: an output shaft from the engine, a transverse main drive input shaft coupled to the output shaft; a main drive sheave at the outboard end of the input shaft; a transverse drive shaft on which the cutterhead is mounted, a driven sheave at the outboard end of the drive shaft; a drive belt coupling the main drive sheave and the driven sheave; and a clutch between the output shaft and the main drive sheave.

In order to monitor the power output of the engine it is known (DEERE & COMPANY Parts Catalog PC-2074 (05-Jun-90, page 3 D 20) to connect a stub shaft for the connection to a dynamometer to the main drive sheave. Said stub shaft has a standardized profile which fits to a universal joint power shaft of the dynamometer.

Monitoring the power output this way is disadvantageous, since in each case the stub shaft has to be installed. Furthermore, the result is influenced by the fact that a fan assembly is mounted to the drive sheave and can be influenced, if the belt slackens on the main drive sheave to a smaller or bigger extend, which causes the cutterhead to rotate. Finally, it exists the possibility that by accident or intention the cutterhead is engaged from the operator's station while the power output is monitored.

US-A-4 408 685 or DE-A1-3 127 395 disclose a drive assembly as defined in the opening paragraph above. However, the sheave of these known drive assemblies is connected by a belt drive to an engine. The shaft is the main drive output shaft, is not driven when the piston is not pressurized or the clutch disengaged and connected to a compression pump for an air conditioning unit. The piston is located in a shaft connected hub and coupled to the blind bore extending axially in a non-rotatable plug. Such a drive unit is not easy to assemble or to service. As the clutch is within the power train from the engine to the shaft the engine output cannot be monitored correctly at the shaft.

DE-A-2 343 184 discloses a belt driven input shaft for a centrifugal clutch having fly weights which can be disengaged by radially shiftable and hydraulically operated pistons. For pressurizing the pistons a fluid passage extends axially in the input shaft from an outboard end of the shaft to which a coupler is releasably connected.

Even if the feature of the coupler connected axially extending fluid passage in the input shaft would be applied to the opening paragraph above monitoring of the power output would be difficult or not possible, and the present invention enables this to be done more readily.

However, it is difficult to monitor power output of such an assembly, and the present invention enables this to be done more readily.

According to the invention the shaft is an input shaft and includes an extended section rigid therewith outboard of the clutch and sheave, and having splines for the connection to a dynamometer drive element, the coupler is releasably attached to the extended section, the fluid passage runs through the extended section, and the extended section is adapted to allow mounting thereon of the dynamometer drive element once the coupler is detached from the extended section, whereby the driving connection between the first and second portions of the clutch is interrupted.

Thus the extension is accessible for connection to a dynamometer. Furthermore, since the coupler must be removed before the dynamometer can be connected there is no risk that the clutch will be inadvertently engaged whilst taking dynamometer readings.

The concept of the invention includes a said self-propelled forage harvester as defined in the third paragraph above on page 1 in which the clutch being the said hydraulically operable clutch, and the drive assembly is a drive assembly according to any preceding claim, the main drive input shaft being the said shaft with which the said first portion of the clutch is mounted for rotation, the main drive sheave being the said sheave with which the second portion of the clutch is mounted for rotation.

An embodiment of the invention will now be described with reference to the accompanying diagrammatic drawings in which:
- Fig. 1: is a schematic, plan view of a self-propelled forage harvester with its drive assembly; and
- Fig. 2: is an enlarged sectional view of that assembly.

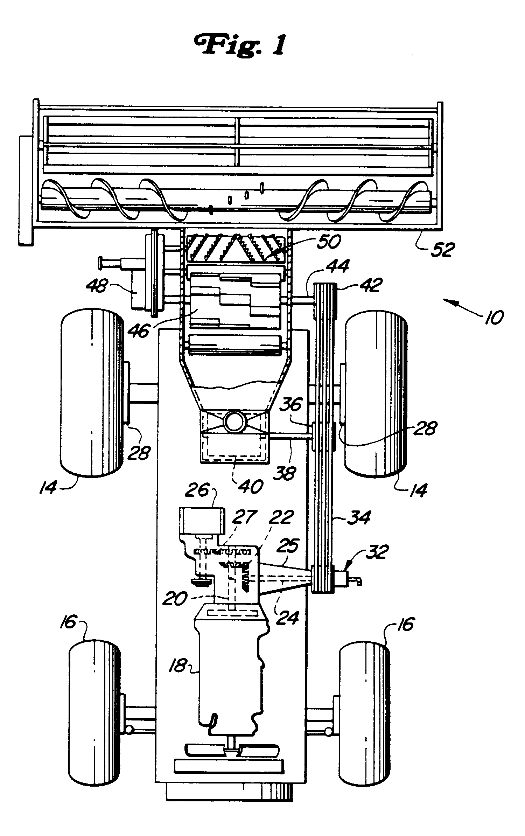

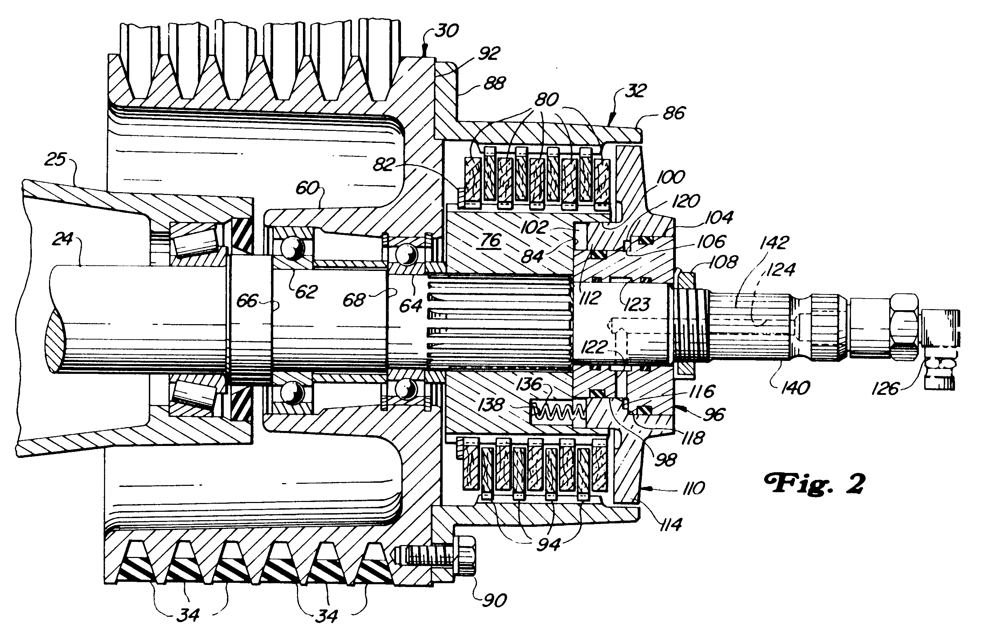

Referring to Fig. 1, there is shown a self-propelled harvester 10, here illustrated as a forage harvester including a frame or chassis 12 supported on front and rear pairs of driven wheels 14 and 16, respectively. Power for driving the wheels is supplied by an engine 18 mounted on a rear portion of the frame 12 and including a forwardly projecting output shaft 20 coupled, by a bevel gear set 22, to a transversely extending drive input shaft 24 rotatably mounted in a rightward projecting housing portion 25 which is attached, by bolts, for being easily separated from the remainder of the transmission housing. A pump 26 is coupled to the forward end of the shaft 20 by a spur gear set 27 and is coupled in a well-known manner, not shown, for delivering fluid to a pair of hydraulic motors 28 respectively drivingly connected to the front pair of wheels 14. A multiple grooved, main drive sheave 30 (Fig. 2) is rotatably mounted on the drive input shaft 24 and may be selectively coupled, as described below in further detail, for rotation therewith by a main drive clutch 32 carried on the shaft 24 outboard of the sheave 30. A multiple V-drive belt 34 is received on the sheave 30 and engages a first driven sheave 36, fixed to the outer end of a drive shaft 38 of a blower 40, and a second driven sheave 42 fixed to the outer end of a drive shaft 44 of a cutterhead 46. A transmission 48 is coupled to an outer left end of the shaft 44 and is coupled to drive a feed roll assembly 50 which receives crop from a header 52, located forwardly of the roll assembly and delivers the crop as a relatively compact mat to the cutterhead 46.

Referring now particularly to Fig. 2, it can be seen that the main drive sheave 30 has a hub 60 rotatably mounted on the drive input shaft 24 by inner and outer roller bearings 62 and 64, respectively, having inner sides of inner races thereof located against respective shaft shoulders 66 and 68, with the outer bearing 64 having its outer race properly axially fixed in the hub 60 by inner and outer snap rings. A spacer 74 extends between the bearing inner races to position the outer race of the inner bearing 62 correctly within the sheave hub 60.

The main drive clutch 32 is a multiple disc clutch including an internally and externally splined hub 76 having its internal splines received on a splined shaft section 78 located just outwardly of the outer bearing 64, and having a plurality of identical, internally splined clutch drive discs 80 received on its external splines, with the axially innermost disc 80 being kept from shifting inwardly by a snap ring 82. For a purpose explained below, a counter-bore 84 is provided in the rightward or axially outer end of the hub 76. An internally splined outer annular ring 86 of the clutch includes an axially inner annular flange 88 secured, as by bolts 90, to an axially outer face 92 of the sheave 30. A plurality of identical, externally splined clutch driven discs 94 is received on the internal splines of the ring 86 and the discs 94 are interleaved with the drive discs 80.

An hydraulic actuator assembly is provided for selectively effecting driving inter-engagement between the discs 80 and 94. This assembly includes an annular fluid manifold 96 slidably received on the drive shaft 24 and having an axially inner section 98 received in the counterbore 84 and cooperating with an inwardly facing surface 100 thereof to form an annular piston receiving cavity 102. The manifold 96 has an axially outer section 104 which is larger in diameter than the inner section 98 and thus has an annular inwardly facing surface forming a shoulder 106. A nut and lock washer assembly 108 is received on the shaft 24 and holds the manifold tight against the bottom of the counterbore 84. A combined piston and pressure plate assembly 110 includes an axially inner annular piston 112 formed integrally with an axially outer pressure plate 114. The piston 112 is slidably received in the piston cavity 102 and includes an annular working face 116 disposed in opposition to the manifold shoulder 106 and maintained in spaced relationship thereto by an annular, outwardly facing shoulder 118 formed on the assembly axially outwardly of the working face 116 and engaged with the manifold shoulder 106 when the clutch is in a disengaged condition as shown. An annular pressurizable cavity 120 is thus defined between the shoulder 106 and face 116. A radial fluid passage 122 is located in the manifold 96 with its outer end opening into the cavity 120 and its inner end opening into an annular fluid recess or groove 123 formed inside the manifold. A fluid passage 124 extends first axially in the shaft from the axialy outer end thereof and then radially to the surface of the shaft at a location in fluid communication with the recess 122. A swivel slip fitting 126 is provided at the end of the shaft 24 for connecting an hydraulic fluid supply-return line to the passage 124. The inner and outer surfaces of the manifold 96 are each provided with a pair of seal assemblies located at opposite sides of the recess for preventing fluid leakage along the shaft 24 and along the inner surface of the piston and pressure plate assembly 110. The pressure plate 114 is disposed for effecting driving inter-engagement between the discs 80 and 94 when the cavity 120 is pressurized to shift the piston 112 axially inwardly to a clutch-engage position. As shown here, pressurized fluid is absent from the cavity 120 and a plurality of clutch release springs 136 (only one shown), located in respective axially extending blind bores 138 arranged in the bottom of the piston-receiving cavity 102, acts to hold the piston 112 in an axially outwardly clutch-release position wherein the pressure plate 114 is spaced from the axially outermost drive disc 80.

It can be seen that the shaft 24 includes an exposed section 140 which extends axially outwardly beyond the nut and lock washer assembly 108 and which is stepped down in diameter. The section 140 is provided with splines 142. Since the section 140 is readily accessible from the exterior of the harvester 10, a dynamometer can easily be mounted on the shaft end to measure the power output of the engine. In order to mount the dynamometer, it is necessary to disconnect the fitting 126 and hence the source of fluid pressure for operating the clutch piston 112. In this way, accidental operation of the cutterhead, harvester unit, blower and (when used) kernel processor drives is prevented, when checking the power output of the engine, since their operation requires engagement of the clutch.

Also, it will be appreciated that the main drive clutch 32 and main drive sheave 30 are easily accessible for servicing and repair or the like and that they can be assembled as a subassembly together with the drive shaft 24 before mounting the drive shaft 24 for being driven from the engine output shaft 20.

## Claims

1. A drive assembly having a shaft (24), a sheave (30) freely rotatably mounted on the shaft (24), an hydraulically operable clutch (32) with a first portion (76) mounted for rotation with the shaft (24) and a second portion (86) mounted for rotation with the sheave (30), and hydraulic means (110, 120, 122, 123, 124) for selectively effecting driving connection between the first and second portions (76, 86) including a detachable fluid supply source coupler (126) and a blind passage (120, 122, 123, 124) running from the coupler (126) via the shaft (24) characterised in that the shaft (24) is an input shaft and includes an extended section (140) rigid therewith outboard of the clutch (32) and sheave (30), and having splines (142) for the connection to a dynamometer drive element, the coupler (126) is releasably attached to the extended section (140), the fluid passage (124) runs through the extended section (140), and the extended section (140) is adapted to allow mounting thereon of the dynamometer drive element once the coupler (126) is detached from the extended section (140), whereby the driving connection between the first and second portions (76, 86) of the clutch (32) is interrupted

2. A drive assembly according to claim 1 characterised in that the hydraulic means includes a piston assembly (112, 114) mounted on the shaft (24) for axial movement by fluid in the said passage (124) so as to connect selectively the first and second portions (76, 86) of the clutch (32).

3. A drive assembly according to claim 2 in which the clutch (32) is disposed outboard of the sheave (30) characterised in that the piston assembly (112, 114) is disposed outboard of the clutch (32), and the part of the shaft (24) on which the first clutch portion (76) is mounted is of larger diameter than that of the extension (140).

4. A drive assembly according to claim 2 or 3 characterised in that the piston assembly (112, 114) is mounted on the shaft (24) via an annular fluid manifold (96) outboard of the first clutch portion (76), and the manifold (96) has a radially inner annular groove (123) about the shaft (24) and a radial passage (124) connecting the annular groove (123) to the piston assembly (112, 114), the annular groove (123) and radial passage (124) forming part of the said fluid passage.

5. A drive assembly according to any preceding claim characterised in that the coupler is a slip fitting (126).

6. A self-propelled forage harvester having an engine (18), a cutterhead (46) and a drive assembly coupling the engine (18) to the cutterhead (46), the drive assembly comprising: an output shaft (20) from the engine (18); a transverse main drive input shaft (24) coupled to the output shaft (20); a main drive sheave (30) at the outboard end of the input shaft (24); a transverse drive shaft (44) on which the cutterhead (46) is mounted, a driven sheave (42) at the outboard end of the drive shaft (44); a drive belt (34) coupling the main drive sheave (30) and the driven sheave (42); and a clutch (32) between the output shaft (20) and the main drive sheave (30) characterised in that the clutch being the said hydraulically operable clutch (32), and the drive assembly is a drive assembly according to any preceding claim, the main drive input shaft being the said shaft (24) with which the said first portion (76) of the clutch (32) is mounted for rotation, the main drive sheave being the said sheave (30) with which the second portion (86) of the clutch (32) is mounted for rotation.

## Patentansprüche

1. Ein Antriebszusammenbau mit einer Welle (24), einer Scheibe (30), die frei drehbar auf die Welle (24) montiert ist, eine hydraulisch betätigbare Kupplung (32) mit einem ersten Teil (76), der zur Drehung mit der Welle (24) vorgesehen ist, und einem zweiten Teil (86), der zur Drehung mit der Scheibe (30) vorgesehen ist, und mit Hydraulikmitteln (110, 120, 122, 123, 124) zur wahlweisen Herstellung einer Antriebsverbindung zwischen dem ersten und zweiten Teil (76, 86), die eine lösbare Kupplung für die Flüssigkeitszufuhr von einer Flüssigkeitsquelle (126) und einen Blindkanal (120, 122, 123, 124) enthalten, der von der Kupplung (126) über die Welle (24) verläuft, dadurch gekennzeichnet, daß die Welle (24) eine Eingangswelle ist und einen verlängerten Abschnitt (140) enthält, der mit ihr starr verbunden ist und sich außerhalb der Kupplung (32) und der Scheibe (30) erstreckt und der Zähne (142) für die Verbindung mit einem Dynamometerantriebselement enthält, wobei die Kupplung (126) lösbar an dem verlängerten Abschnitt (140) angebracht ist, daß der Flüssigkeitskanal (124) durch den verlängerten Abschnitt (140) verläuft, und daß der verlängerte Abschnitt (140) dazu bestimmt ist, die Montage des Dynamometerantriebselements zuzulassen, wenn die Kupplung (126) von dem verlängerten Abschnitt (140) abgenommen ist, wobei die Antriebsverbindung zwischen dem ersten und dem zweiten Teil (76, 86) der Kupplung (32) unterbrochen ist.

2. Ein Antriebszusammenbau nach Anspruch 1, dadurch gekennzeichnet, daß die Hydraulikmittel einen Kolbenzusammenbau (112, 114) enthalten, der auf die Welle (24) für eine axiale Bewegung durch Flüssigkeit in dem besagten Kanal (124) montiert ist, um so wahlweise den ersten und den zweiten Teil (76, 86) der Kupplung (32) miteinander zu verbinden.

3. Ein Antriebszusammenbau nach Anspruch 2, in dem die Kupplung (32) außerhalb der Scheibe (30) angeordnet ist, dadurch gekennzeichnet, daß der Kolbenzusammenbau (112, 114) außerhalb der Kupplung (32) angeordnet ist, und daß der Teil der Welle (24), auf den der erste Kupplungsteil (76) montiert ist, von größerem Durchmesser ist als der der Verlängerung (140).

4. Ein Antriebszusammenbau nach Anspruch 2 oder 3, dadurch gekennzeichnet, daß der Kolbenzusammenbau (112, 114) über einen ringförmigen Flüssigkeitsverteiler (96) außerhalb des ersten Kupplungsteils (76) montiert ist, und daß der Verteiler (96) eine radial innere ringförmige Nut (123) um die Welle (24) und einen radialen Kanal (124) hat, der die ringförmige Nut (123) mit dem Kolbenzusammenbau (112, 114) verbindet, wobei die ringförmige Nut (123) und der radiale Kanal (124) einen Teil des genannten Flüssigkeitskanals bilden.

5. Ein Antriebszusammenbau nach irgendeinem vorhergehenden Anspruch, dadurch gekennzeichnet, daß die Kupplung (126) ein Gleitverbundstück ist.

6. Ein selbstfahrender Futterhäcksler mit einem Motor (18), einer Schneidtrommel (46) und mit einem Antriebszusammenbau, der den Motor (18) mit der Schneidtrommel (46) verbindet, wobei der Antriebszusammenbau enthält: eine Ausgangswelle (20) des Motors (18); eine sich quer erstreckende Hauptantriebseingangswelle (24), die an die Ausgangswelle (20) angeschlossen ist; eine Hauptantriebsscheibe (30) an dem außenliegenden Ende der Eingangswelle (24); eine quer verlaufende Antriebswelle (44), auf die die Schneidtrommel (46) montiert ist, eine angetriebene Scheibe (42) an dem außenliegenden Ende der Antriebswelle (44); ein Antriebsriemen (34), der die Hauptantriebsscheibe (30) und die angetriebene Scheibe (42) miteinander verbindet; und eine Kupplung (32) zwischen der Ausgangswelle (20) und der Hauptantriebsscheibe (30), dadurch gekennzeichnet, daß die Kupplung die genannte hydraulisch betätigbare Kupplung (32) ist, und daß der Antriebszusammenbau ein Antriebszusammenbau gemäß irgendeinem der vorangehenden Ansprüche ist, wobei die Hauptantriebseingangswelle die genannte Welle (24) ist, mit der der genannte erste Teil (76) der Kupplung (32) zum Drehen montiert ist, wobei die Hauptantriebsscheibe die genannte Scheibe (30) ist, mit der der zweite Teil (86) der Kupplung (32) zum Drehen zusammengebaut ist.

## Revendications

1. Groupe d'entraînement comprenant un arbre (24), une poulie (30) montée de façon librement tournante sur l'arbre (24), un embrayage à commande hydraulique (32) dont une première partie (76) est montée pour rotation avec l'arbre (24) et dont une deuxième partie (86) est montée pour rotation avec la poulie (30), et des moyens hydrauliques (110,120,122,123,124) pour effectuer sélectivement une connexion d'entraînement entre les première et deuxième parties (76,86) comportant un raccord démontable (126) d'alimentation en fluide et un passage borgne (120, 122,123,124) s'étendant dans l'arbre (24) à partir du raccord (126), caractérisé en ce que l'arbre (24) est un arbre d' entrée et comprend un prolongement (140) solidaire de l'arbre et situé du côté extérieur de l'embrayage (32) et de la poulie (30) et comportant des cannelures (142) pour l'accouplement d'un élément d'entraînement de dynamomètre, le raccord (126) est fixé de façon démontable au prolongement (140) , le passage de fluide (124) s'étend dans le prolongement (140), et le prolongement (140) est prévu pour qu'on puisse y monter l'élément d'entraînement de dynamomètre une fois que le raccord (126) est enlevé du prolongement (140), de sorte que la connexion d'entraînement entre les première et deuxième parties (76,86) de l'embrayage (32) est interrompue.

2. Groupe d'entraînement suivant la revendication 1, caractérisé en ce que les moyens hydrauliques comprennent un dispositif à piston (112,114) monté sur l'arbre (24) pour un mouvement axial sous l'action de fluide dans ledit passage (124), afin de connecter sélectivement les première et deuxième parties (76,86) de l'embrayage (32).

3. Groupe d'entraînement suivant la revendication 2, dans lequel l'embrayage (32) est disposé du côté extérieur de la poulie (30), caractérisé en ce que le dispositif à piston (112,114) estplacé du côté extérieur de l'embrayage (32), et la partie de l'arbre (24) sur laquelle est montée la première partie d'embrayage (76) a un diamètre plus grand que celui du prolongement (140).

4. Groupe d'entraînement suivant la revendication 2 ou 3 , caractérisé en ce que le dispositif à piston (112,114) est monté sur l'arbre (24) par l'intermédiaire d'un distributeur annulaire de fluide (96) placé du côté extérieur de la première partie d'embrayage (76), et le distributeur (96) comporte une gorge annulaire radialement intérieure (123) autour de l'arbre (24) et un passage radial (124) reliant la gorge annulaire (123) au dispositif à piston (112,114), la gorge annulaire (123) et le passage radial (124) faisant partie dudit passage de fluide.

5. Groupe d'entraînement suivant l'une quelconque des revendications précédentes, caractérisé en ce que le raccord est un raccord glissant (126).

6. Ramassage-hâcheuse automotrice comprenant un moteur (18), une tête de coupe (46) et un groupe d' entraînement reliant le moteur (18) à la tête de coupe (46), le groupe d'entraînement comprenant : un arbre de sortie (20) du moteur (18) ; un arbre transversal d'entrée d'entraînement principal (24) accouplé à l'arbre de sortie (20) ; une poulie d'entraînement principal (30) à l'extrémité extérieure de l'arbre d' entrée (24) ; un arbre d'entraînement transversal (44) sur lequel est montée la tête de coupe (46) ; une poulie entraînée (42) montée à l'extrémité extérieure de 1 'arbre d'entraînement (44) ; une courroie d'entraînement (34) reliant la poulie d'entraînement principal (30) et la poulie entraînée (42); et un embrayage (32) entre l'arbre de sortie (20) et la poulie d'entraînement principal (30), caractérisée en ce que l'embrayage est ledit embrayage à commande hydraulique (32) et le groupe d'entraînement est un groupe d'entraînement suivant l'une quelconque des revendications précédentes, l'arbre d'entrée d'entraînement principal est le dit arbre (24) sur lequel ladite première partie (76) de l'embrayage (32) est montée pour rotation, et la poulie d'entraînement principal est ladite poulie (30) sur laquelle la deuxième partie (86) de l'embrayage (32) est montée pour rotation.
